Europäisches Patentamt

European Patent Office

Office européen des brevets

(11) Veröffentlichungsnummer: **0 388 753**
**A1**

(12) **EUROPÄISCHE PATENTANMELDUNG**

(21) Anmeldenummer: **90104670.6**

(22) Anmeldetag: **12.03.90**

(51) Int. Cl.⁵: **H01R 23/70, H02H 9/00**

(30) Priorität: **22.03.89 DE 8903649 U**

(43) Veröffentlichungstag der Anmeldung:
**26.09.90 Patentblatt 90/39**

(84) Benannte Vertragsstaaten:
**DE FR GB IT**

(71) Anmelder: **Siemens Aktiengesellschaft**
**Wittelsbacherplatz 2**
**D-8000 München 2(DE)**

(72) Erfinder: **Breunig, Hans,Dipl.-Ing.**
**Reinhold-Schneider-Strasse 28**
**D-7500 Karlsruhe(DE)**

(54) **Elektronische Baugruppe.**

(57) Beim Zusammenfügen der beiden Teile des Steckverbinders einer Baugruppe wird diese an die Versorgungsspannungsquelle zunächst über einen voreilenden ersten Kontakt (STV1, STV2) und einen Widerstand (R1) und dann über einen zweiten Kontakt (STV3) direkt an die Versorgungsspannungs- quelle angeschlossen. Dadurch wird vermieden, daß beim Einstecken der Baugruppe ein Stromstoß ent- steht, der als Störimpuls auf andere Baugruppen wirkt.

Das hauptsächliche Anwendungsgebiet der Er- findung sind Baugruppen von Bussystemen.

**EP 0 388 753 A1**

Die Erfindung betrifft eine elektronische Baugruppe gemäß dem Oberbegriff des Anspruchs 1.

Elektronische Systeme sind üblicherweise aus elektronischen Baugruppen aufgebaut, die aus mit Bauelementen bestückten, rechteckigen Leiterplatten bestehen, welche hochkant und reihenweise in Baugruppenträger einschiebbar sind. Die rückwärtige Seite jeder Baugruppe ist mit Kontaktmitteln, im allgemeinen mit einer Steckerleiste, versehen, die mit einer an der Rückwand des Baugruppenträgers angebrachten Federleiste eine Steckverbindung bildet. Die Buchsenleisten sind häufig untereinander über Busleitungen verbunden. Die Baugruppen können in Führungsschienen in den Baugruppenträger eingeschoben sein, sie können aber auch mittels einer lösbaren Gelenkverbindung mit diesem verbunden sein, so daß die beiden Teile der Steckverbindung mit einer Schwenkbewegung zusammengefügt werden. Anstelle oder zusätzlich zu den rückwärtigen Steckverbinder sind auch Frontstecker üblich, mit denen Kabel an den Frontseiten der Baugruppe anschließbar sind.

Über die Steckverbinder werden nicht nur Daten- und Steuersignale von und zu den Baugruppen übertragen, sondern auch der Versorgungsstrom. Für die Inbetriebsetzung und Wartung ist es erforderlich, einzelne Baugruppen unter Spannung aus dem in Betrieb befindlichen System entnehmen oder einzufügen zu können, ohne daß dadurch andere Teile des Systems gestört werden. Die bekannten Baugruppen (US-PS 3 993 935) sind aus diesem Grunde mit voreilenden Stiften versehen, über welche sie beim Einstecken zuerst mit der Betriebsspannung versorgt werden, so daß sie, bis die anderen Verbindungen hergestellt werden, sich in einem definierten, betriebsbereiten Zustand befinden. Auch ist bekannt (DE-OS 35 04 560), an den Baugruppen einen Schalter anzubringen, der bei halb gezogener oder nur teilweise eingesteckter Baugruppe, aber noch bestehender elektrischer Verbindung, die Ausgänge der Baugruppe in einen hochohmigen Zustand schaltet. Eine solche elektrische oder mechanische Trennung des baugruppenseitigen Teils der Steckverbindungen von den systemseitigen Teilen ist vor allem bei der Anordnung nach der DE-PS 26 55 422 erforderlich, die Steckverbinder ähnliche Kontaktmittel auch an den in Einsteckrichtung verlaufenden Längsseiten aufweist. Denn bei einer solchen Baugruppe tritt das Problem auf, daß beim Ziehen oder Einschieben die Kontakte an den Längsseiten aneinander vorbeigeführt werden und sich dabei berühren. Zur Vermeidung dieses Problems werden daher die Kontakte beim Einschieben und Ziehen der Baugruppe entweder mechanisch abgehoben oder mittels elektrischer oder elektronischer Schalter von den Zuleitungen getrennt.

Die bekannten Anordnungen stellen zwar weitgehend sicher, daß die Baugruppen sich in einem definierten Zustand befinden, wenn sie an das System angeschlossen werden. Der vorliegenden Erfindung liegt darüber hinaus die Aufgabe zugrunde, auch Störungen auf andere Teile eines Systems zu vermeiden, die durch das Anschalten der Baugruppe an die Versorgungsspannungsquelle entstehen können.

Erfindungsgemäß wird diese Aufgabe mit den im kennzeichnenden Teil des Anspruchs 1 angegebenen Maßnahmen gelöst. Der Erfindung liegt die Erkenntnis zugrunde, daß die Baugruppen für die Versorgungsspannungsleitungen eine Eingangskapazität haben, die beim direkten Anschluß über die Kontakte des Steckverbinders aufgeladen wird und daß durch diesen Stromstoß in den Versorgungs- und Masseleitungen Störungen bei anderen Baugruppen auftreten können. Die Eingangskapazität ist durch den üblichen Pufferkondensator bedingt. Es können aber auch andere in der Baugruppe enthaltene Kapazitäten, die beim Anschalten der Baugruppe aufgeladen werden, als Eingangskapazität wirksam sein. Mit der Erfindung wird erreicht, daß beim Zusammenfügen der beiden Teile des Steckverbinders die Baugruppe zunächst über den Strombegrenzungswiderstand an die Versorgungsspannung angeschlossen wird, so daß der Pufferkondensator der Baugruppe und die anderen wirksamen Kapazitäten über den Widerstand zunächst verhältnismäßig langsam aufgeladen werden und daß die niederohmige Verbindung zur Versorgungsspannungsquelle erst dann hergestellt wird, wenn die Kondensatoren nahezu aufgeladen sind. Mit einem Zeitglied oder einem weiteren, nacheilenden Kontakt kann die Baugruppe aktiviert werden, so daß deren Funktion bei voller Nennspannung und damit optimalem Störabstand gewährleistet ist.

Die Baugruppe kann so aufgebaut sein, daß bei entnommener Baugruppe alle Ein- und Ausgänge hochohmig sind mit Ausnahme der Masseverbindung und der Stromversorgungseingänge, die über den Strombegrenzungswiderstand geführt sind. Mit dem Einstecken der Baugruppe wird deren Eingangskondensator aufgeladen und ein Zeitglied gestartet, das aus dem Strombegrenzungswiderstand und dem Eingangskondensator der Baugruppe bestehen kann. Nach Ablauf der im Zeitglied eingestellten Zeit ist der Kondensator aufgeladen, und es wird der Strombegrenzungswiderstand überbrückt, so daß die Baugruppe niederohmig mit Strom versorgt wird. Zu diesem Zeitpunkt kann ein weiteres Zeitglied gestartet werden, das nach der eingestellten Zeit die Baugruppe für den Betrieb freigibt. Ein geringerer Aufwand ist erforderlich, wenn anstelle der Zeitglieder vor- bzw. nacheilende Kontakte im Steckverbinder vorgesehen sind, so daß das sukzessive Anschalten der Baugruppe durch die begrenzte Einsteckgeschwindigkeit erreicht wird. In diesem Falle muß der Strombegrenzungswiderstand so dimensioniert sein, daß der Eingangskondensator der Baugruppe aufgeladen ist, bis die direkte Verbindung zur Versorgungsquelle hergestellt ist. Demgemäß hängt die Dimensionierung auch von der Eingangskapazität ab. Zweckmäßig beträgt der Strombegrenzungswiderstand höchstens 30 %, vorteilhaft höchstens 20 %, des Ersatzwiderstandes der Baugruppe. Als Strombegrenzungswiderstand kann vor allem bei großer Stromaufnahme der Baugruppe auch ein induktiver Widerstand eingesetzt werden, der zweckmäßig mit einem ohmschen Widerstand bedämpft ist.

Der Strombegrenzungswiderstand ist zweckmäßig auf der Baugruppe angeordnet. Er kann sich aber auch außerhalb, z. B. in einer Stromversorgungseinheit, befinden. Im Falle einer Busverdrahtung kann eine Ader der Busleitung über den Strombegrenzungswiderstand gespeist werden, so daß er für alle Baugruppen nur einmal vorhanden sein muß.

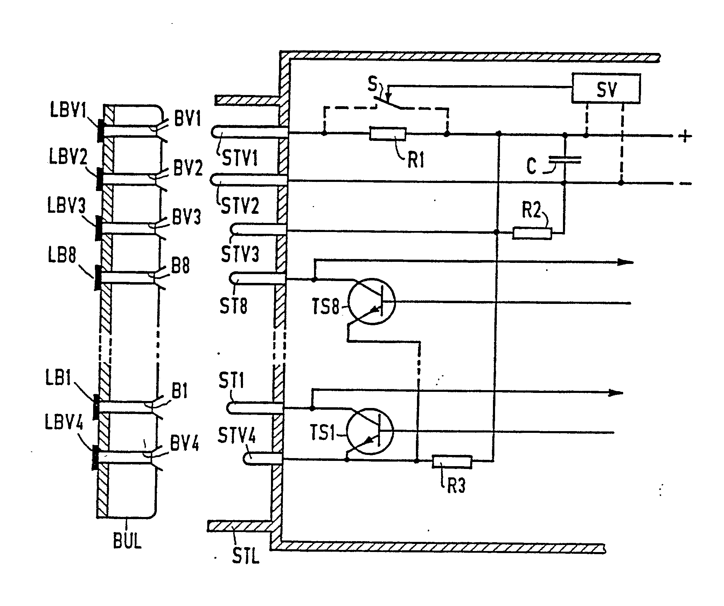

Anhand der Zeichnung, in der ein Ausführungsbeispiel im Prinzip dargestellt ist, werden im folgenden die Erfindung sowie weitere Ausgestaltungen und Ergänzungen näher beschrieben und erläutert.

Eine Buchsenleiste BUL enthält Buchsen BV1, BV2, BV3, BV4, B1 ... B8, die in Leiterbahnen LB1 ... LB8, LBV1 ... LBV4 gelötet sind, welche eine Busleitung bilden. Eine Steckerleiste STL ist mit Stiften STV1, STV2, STV3, STV4, ST ... STB versehen. Werden die Buchsen und die Steckerleiste zusammengefügt, so greifen die Stifte in die Buchsen ein. Die Steckerleiste STL ist Teil einer Baugruppe. Auf den Leiterbahnen LBV1, LBV3 liegt die positive Versorgungsspannung der Baugruppe, auf den Leiterbahnen LBV2, LBV4 die negative. Mit C ist die Eingangskapazität der Baugruppe bezüglich der Stromversorgung bezeichnet; sie besteht im wesentlichen aus einem Pufferkondensator. R2 ist der Ersatzwiderstand der Baugruppe, das ist der Widerstand, der durch das Verhältnis von Versorgungsspannung zu dem im Betrieb aufgenommenen Strom errechnet wird. Über die Leiterbahnen LB1 ... LB8 werden zwischen Baugruppen, die entsprechend der dargestellten aufgebaut sind, binäre Signale übertragen. Die Ausgänge der Baugruppen werden von Transistoren TS1 ... TS8 in Open-Kollektor-Schaltung gebildet.

Beim Zusammenfügen der Steckerleiste STL und der Buchsenleiste BUL kontaktieren zunächst die voreilenden Stifte STV1, STV2 mit den Buchsen BV1, BV2. Die Baugruppe wird daher über einen Strombegrenzungswiderstand R1 mit Spannung versorgt, so daß die Eingangskapazität C mit der Zeitkonstante R1 x C aufgeladen wird. Der Ladestrom ist durch den Widerstand R1 auf einen sol chen Wert begrenzt, daß in den anderen an die Busleitung angeschlossenen Baugruppen keine Störung auftritt. Die positive am Kondensator anliegende Spannung gelangt über einen Widerstand R3 an die Emitter der Transistoren TS1 ... TS8, so daß diese unabhängig von der jeweiligen zufällig anliegenden Basisspannung gesperrt sind. Beim weiteren Einschieben der Baugruppe in die Buchsenleiste BUL kontaktieren die Stifte ST1 ... ST8, so daß nun der Strombegrenzungswiderstand R1 überbrückt ist, die Baugruppe direkt die Versorgungsspannung erhält. Sie kann daher einen definierten Betriebszustand einnehmen, in dem z. B. den Basiselektroden der Transistoren TS1 ... TS8 Sperrsignal zugeführt wird. Beim weiteren Einschieben der Baugruppe in die Buchsenleiste BUL kontaktiert der Stift STV4 die Buchse BV4, so daß nun die Emitter der Transistoren das negative Potential der Versorgungsspannung erhalten und damit mit den Basiselektroden zugeführten Signalen in den leitfähigen Zustand gesteuert werden können. Der Strombegrenzungswiderstand R1 muß so bemessen sein, daß er einerseits den Ladestrom des Kondensators C auf einen Wert begrenzt, daß keine Störung in den anderen Baugruppen auftritt, daß aber auch andererseits der Kondensator C weitgehend aufgeladen ist, bis der Stift STV3 die Buchse BV3 beim Einschieben kontaktiert. Vorteilhaft ist der Widerstand R1 gleich oder kleiner ein Fünftel des Ersatzwiderstandes R2. Sollte die Zeitdauer zwischen dem Kontaktieren der Stifte STV1, STV2 mit den Buchsen BV1, BV2 und dem Kontaktieren des Stiftes STV3 mit der Buchse BV3 nicht ausreichen, um den Kondensator C ohne Störung anderer Baugruppen aufzuladen, kann man, wie in gestrichelten Linien angedeutet, dem Widerstand R einen Schalter S parallel schalten, der von einer Spannungsüberwachungsschaltung SV gesteuert ist, derart, daß diese den Schalter schließt, wenn die Spannung am Kondensator C einen vorgegebenen Wert erreicht. Mit einer solchen Schaltung wird der weitere Vorteil erzielt, daß auch die Leitung mit dem Stift STV1 und der Buchse BV1 für die Stromversorgung der Baugruppe während des Betriebes genutzt wird. Auf das Kontaktpaar STV4, BV4 kann verzichtet werden, wenn man ein Zeitglied vorsieht, das mit dem Schließen des Schalters S bzw. nach dem Kontaktieren des Stif tes STV3 und der Buchse BV3 gestartet wird und das nach einer Zeit, in der die Baugruppe zuverlässig in Betrieb genommen ist, die Transistoren TS1 ... TS8 freigibt.

Im Ausführungsbeispiel wird die Baugruppe parallel zu den Stiften STi in die Buchsenleiste BUL gesteckt. Die Baugruppe kann aber auch um eine lösbare Gelenkverbindung schwenkbar sein.

**Ansprüche**

1. Elektronische Baugruppe, die über einen eine Vielzahl von Kontakten aufweisenden Steckverbinder, der aus einem ersten, mit der Baugruppe verbundenen Teil und einem zweiten, mit einer Versorgungsspannungsquelle elektrisch verbundenen Teil besteht, bei deren Zusammenfügen die Kontakte geschlossen werden, wobei einzelne Kontakte vor anderen geschlossen werden und die Baugruppe über mehrere Kontakte mit der Versorgungsspannungsquelle verbunden ist, **dadurch gekennzeichnet**, daß beim Zusammenfügen der beiden Teile (BUL, STL) des Steckverbinders die Baugruppe an die Versorgungsspannungsquelle zunächst über einen Strombegrenzungswiderstand (R1) und verzögert niederohmig direkt an die Versorgungsspannungsquelle angeschlossen ist.

2. Elektronische Baugruppe nach Anspruch 1, **dadurch gekennzeichnet**, daß der Strombegrenzungswiderstand (R1) ein induktiver Widerstand ist.

3. Elektronische Baugruppe nach Anspruch 1 oder 2, **dadurch gekennzeichnet**, daß beim Zusammenfügen der beiden Teile des Steckverbinders die Baugruppe an die Versorgungsspannungsquelle zunächst über einen voreilenden ersten Kontakt (STV1, STV2, BV1, BV2) und den Strombegrenzungswiderstand (R1) und dann über einen zweiten Kontakt (STV3, BV3) direkt an die Versorgungsspannungsquelle angeschlossen ist.

4. Elektronische Baugruppe nach einem der Ansprüche 1 bis 3, **dadurch gekennzeichnet**, daß beim Zusammenfügen der beiden Teile des Steckverbinders die Baugruppe zunächst über den Stromgebrenzungswiderstand (R1) angeschlossen und ein Zeitglied gestartet wird und daß nach Ablauf der im Zeitglied eingestellten Zeit die Baugruppe über einen Schalter direkt an die Versorgungsspannungsquelle angeschlossen wird.

5. Elektronische Baugruppe nach einem der Ansprüche 1 bis 5, **dadurch gekennzeichnet**, daß der Strombegrenzungswiderstand (R1) in der Baugruppe enthalten ist.

6. Elektronische Baugruppe nach einem der Ansprüche 1 bis 5, **dadurch gekennzeichnet**, daß der Strombegrenzungswiderstand (R1) einen Wert hat, der kleiner als ein Drittel, vorzugsweise ein Fünftel des Ersatzwiderstandes (R2) der Baugruppe ist.

7. Elektronische Baugruppe nach einem der Ansprüche 1 bis 6, **dadurch gekennzeichnet**, daß mittels eines nacheilenden Kontaktes (BV4, STV4) oder eines Zeitgliedes die Ausgänge (TS1 ... TS8) der Baugruppe freigegeben sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3402845 (SIEMENS AG) <br> * das ganze Dokument * <br> --- | 1-3, 5 | H01R23/70 <br> H02H9/00 |
| X | US-A-4245270 (BUSBY) <br> * das ganze Dokument * <br> --- | 1, 3, 4 | |
| X | PATENT ABSTRACTS OF JAPAN <br> vol. 13, no. 459 (E-832) 17 Oktober 1989, <br> & JP-A-1 177829 (FUJITSU LTD) 14 Juli 1989, <br> * das ganze Dokument * <br> --- | 1 | |
| A | FR-A-2615669 (ALCATEL CIT.) <br> * das ganze Dokument * <br> --- | 1-3 | |
| A | DE-A-3206768 (SIEMENS AG) <br> * das ganze Dokument * <br> ----- | 4 | |

RECHERCHIERTE SACHGEBIETE (Int. Cl.5)

H01R
H05K
H01H
H02H

Der vorliegende Recherchenbericht wurde für alle Patentansprüche erstellt

| Recherchenort | Abschlußdatum der Recherche | Prüfer |
|---|---|---|
| DEN HAAG | 22 JUNI 1990 | TAPPEINER R. |